# FASCICULE DE BREVET EUROPEEN

(11) **EP 3 994 679 B1**
(45) Date de publication et mention de la délivrance du brevet: **03.05.2023**
(21) Numéro de dépôt: 20734989.5
(22) Date de dépôt: 03.07.2020
(51) Int. Cl.: G10K 11/165, B60R 13/08

(54) **ECRAN DE PROTECTION ACOUSTIQUE DESTINÉ À ÊTRE MONTÉ SOUS UN MOTEUR DE VÉHICULE AUTOMOBILE**
AKUSTISCHE ABSCHIRMUNG ZUR INSTALLATION UNTER EINEM KRAFTFAHRZEUGMOTOR
ACOUSTIC SHIELD INTENDED TO BE INSTALLED UNDER A MOTOR VEHICLE ENGINE

(30) Priorité: 04.07.2019 FR 1907444
(43) Date de publication de la demande: 11.05.2022
(73) Titulaire: TREVES PRODUCTS, SERVICES & INNOVATION, 75008 Paris (FR)
(72) Inventeur: LECOMTE, Alicia, 75008 Paris (FR); DELINSELLE, Eric, 75008 Paris (FR); CAPRON, Christophe, 75008 Paris (FR)
(74) Mandataire: Sayettat, Julien Christian
(86) Numéro de dépôt international: PCT/EP2020/068763
(87) Numéro de publication internationale: WO 2021/001519

(56) Documents cités:
- EP-A1- 3 269 860
- US-A1- 2014 070 562
- US-A1- 2019 080 678

## Description

L'invention concerne un écran de protection acoustique destiné à être monté sous un moteur de véhicule automobile.

Le document US 2019/080678 décrit un écran de protection acoustique destiné à être monté sous un moteur de véhicule automobile, ledit écran comprenant un corps fibreux et poreux thermo-comprimé, ledit écran étant dan lequel les fibres constitutives dudit corps se répartissent selon les pourcentages en poids suivants:
- 55% des fibres d'absorption acoustique à base de polyéthylène téréphtalate (PET) et de titre égal à 2,2 dtex,
- 15% de fibres de verre pour apporter la tenue mécanique,
- 15% de fibres de liage en polypropylène assurant une liaison entre les fibres dudit corps suite à leur fusion.

Il est connu de réaliser un écran de protection acoustique destiné à être monté sous un moteur de véhicule automobile, ledit écran comprenant un corps fibreux et poreux thermo-comprimé à base de fibres de verre, lesdites fibres étant reliées entre elles par du polypropylène, sous formes de fibres, notamment de titre 6,7 dtex, qui a été amené à son point de fusion.

Un tel écran présente l'avantage, de par la porosité du corps, de permettre une absorption acoustique du bruit émis par le moteur.

Par ailleurs, l'emploi de fibre de verre permet de conférer au corps une très bonne rigidité.

Un tel écran est sujet, au cours de sa vie, à des projections de gravier qui sont très dommageables pour lui, les fibres de verre se rompant progressivement, ce qui conduit à sa dégradation prématurée.

Pour pallier cet inconvénient, il a été proposé de revêtir la face du corps exposée aux projections d'un film plastique permettant d'amortir le choc des gravillons et de préserver l'intégrité du corps.

Cependant, la mise en place d'un tel film conduit à un renchérissement du coût de fabrication de l'écran et aussi à son alourdissement.

Enfin, les fibres de verre telles que définies ci-dessus ne sont pas les fibres les plus appropriées pour réaliser une absorption acoustique optimale en raison de leur diamètre important, notamment de l'ordre de 10 à 30 microns.

L'invention a pour but de pallier ces inconvénients en proposant un écran qui présente un compromis optimisé entre les différentes exigences détaillées ci-dessus : la rigidité, la résistance à la projection de gravillons et enfin les propriétés d'absorption acoustique.

A cet effet, l'invention propose un écran de protection acoustique destiné à être monté sous un moteur de véhicule automobile, ledit écran comprenant un corps fibreux et poreux thermo-comprimé, les fibres constitutives dudit corps se répartissant selon les pourcentages en poids suivants :
- entre 15% et 25% de fibres d'absorption acoustique à base de polyéthylène téréphtalate (PET) et de titre compris entre 1,5 et 2 dtex,
- entre 30% et 40% de fibres de verre pour apporter la tenue mécanique,
- entre 40% et 50% de fibres de liage en polypropylène assurant une liaison entre les fibres dudit corps suite à leur fusion.

Plus particulièrement, les fibres se répartissent selon les pourcentages en poids suivants :
- entre 18% et 22% de fibres d'absorption acoustique,
- entre 33% et 37% de fibres de verre,
- entre 43% et 47% de fibres de liage.

Avec l'agencement proposé, on obtient un excellent compromis entre toutes les exigences sus mentionnées.

La présence de fibres d'absorption de faible titre, notamment de 1,7 dtex, permet de rehausser les propriétés d'absorption de l'écran.

Les fibres de verre confèrent sa rigidité mécanique à l'écran.

Par ailleurs, les fibres d'absorption apportent également une contribution à la résistance de l'écran à la projection de gravillons.

Enfin, les fibres de liage permettent d'assurer la liaison inter-fibres.

A titre d'exemple, on peut utiliser des fibres de liage présentant un titre de 6,7 dtex avant leur fusion.

On dispose en définitive d'un écran essentiellement fibreux dont la rigidité, la résistance à la projection de gravillons et les propriétés d'absorption acoustique sont agencées au mieux de manière à trouver un compromis optimal entre toutes les exigences auxquelles doit répondre l'écran.

D'autres particularités et avantages de l'invention apparaîtront dans la description qui suit, faite en référence aux figures jointes, dans lesquelles :
[Fig.1] est un schéma de principe d'un dispositif de test de la résistance d'un échantillon à la projection de gravillons,
[Fig.2] est une représentation graphique de la performance en absorption acoustique (coefficient alpha en ordonnée) en fonction de la fréquence 1/3 octave en Hertz, en champ diffus, d'un échantillon issu d'un écran selon l'invention (courbe 1) et d'un autre échantillon issu d'un écran de référence (courbe 2) selon l'art antérieur (dont les caractéristiques sont présentées plus bas).

On décrit à présent un écran de protection acoustique destiné à être monté sous un moteur de véhicule automobile, ledit écran comprenant un corps fibreux et poreux thermo-comprimé, les fibres constitutives dudit corps se répartissant selon les pourcentages en poids suivants :
- entre 15% et 25% de fibres d'absorption acoustique à base de polyéthylène téréphtalate (PET) et de titre compris entre 1,5 et 2 dtex, notamment de 1,7 dtex
- entre 30% et 40% de fibres de verre pour apporter la tenue mécanique,
- entre 40% et 50% de fibres de liage en polypropylène assurant une liaison entre les fibres dudit corps suite à leur fusion.

Plus particulièrement, les fibres se répartissent selon les pourcentages en poids suivants :
- entre 18% et 22% de fibres d'absorption acoustique,
- entre 33% et 37% de fibres de verre,
- entre 43% et 47% de fibres de liage.

Selon une réalisation, les fibres de verre présentent un diamètre compris entre 10 et 30 microns.

Selon une réalisation, les fibres de verre présentent une longueur comprise entre 60 et 100 mm.

Selon une réalisation, le propylène constitutif des fibres de liage a subi une modification chimique rehaussant son point de fusion (fibres « warmstabilised »), le portant notamment à une température supérieure à 150°C, ce qui permet une meilleure résistance de l'écran en environnement chaud.

Selon une réalisation, les fibres de liage ont une longueur comprise entre 55 et 65 mm.

Pour déterminer la résistance à la projection de gravillons (appelée aussi « résistance au grenaillage ») on peut appliquer le protocole de test décrit ci-après.

Le principe est de bombarder de grenaille d'acier coulé, au travers d'une buse, l'échantillon à tester.

La résistance au grenaillage est caractérisée par le temps de nécessaire pour percer l'échantillon.

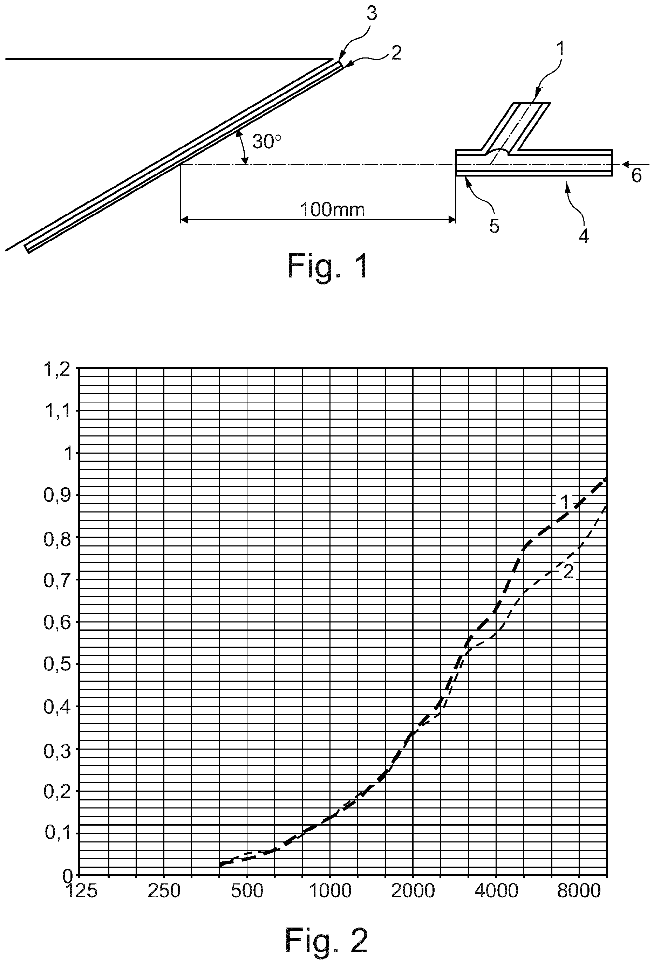

Les conditions opératoires de détermination de la résistance au grenaillage, dont un dispositif de test est schématisé en figure 1, sont les suivantes :
- la grenaille 1 est rendue angulaire par concassage de grenaille sphérique, de type « GP 14 Wheelabrator Allevard ».
- l'échantillon 2 est sous forme de plaque carrée de 150x150 mm ; son épaisseur est mesurée avec un micromètre à touche sur une surface d'environ 0,5 cm² sous une pression de 0,22 +/- 0,01 MPa ; il est fixé, par adhésion ou fixation mécanique (colle cyanoacrylique, film adhésif double face, etc.) sur une plaque de tôle 3 ; il est conditionné au préalable à une température de 24 +/- 4°C pendant 2 heures minimum, le test étant réalisé à la même température.
- un canon 4 de projection de grenaille est disposé à une distance de 100 +/- 1 mm de l'échantillon ; la tôle 3 est incliné de 30° par rapport à la buse 5 ; le diamètre de la buse 5 est de 10 +/- 0,1 mm ; le diamètre de l'injecteur d'air 6 est de 4 mm ; la longueur du canon 4 est de 111 mm ; une projection de 25 kg de grenaille 1 est réalisée sur l'échantillon 2 au travers de la buse 5 selon un débit de 2,6 +/- 0,5 kg/min, sous une pression de 3,2 +/- 1 bar.
- la résistance au grenaillage est définie par la moyenne arithmétique des résultats obtenus sur trois échantillons 2.

On présente ci-dessous une comparaison du module de flexion et du temps de résistance au grenaillage d'un échantillon issu d'un écran selon l'invention et d'un échantillon de référence issu d'un écran selon l'art antérieur (de composition 45% de polypropylène et 55% de fibres de verre).

Les échantillons testés présentent une épaisseur de 4 mm et une masse surfacique de 1000 g/m².

Les résultats obtenus sont les suivants :

**[Table 1]**

| **Type d'écran** | **Module de flexion (MPa)** | **Temps résistance au grenaillage (s)** |
|---|---|---|
| selon l'art antérieur | 615 | 35 |
| selon l'invention | 560 | 60 |

On observe que le remplacement de fibres de verre par des fibres d'absorption dégrade faiblement les propriétés mécaniques mais améliore de façon très significative la résistance au grenaillage.

On commente à présent les résultats de performances acoustiques illustrés en figure 2.

Les échantillons testés sont analogues à ceux testés en résistance au grenaillage en termes de composition, épaisseur et masse surfacique.

On observe une amélioration notable de l'absorption acoustique avec l'échantillon issu d'un écran selon l'invention (courbe 1), par rapport à l'échantillon issu d'un l'écran selon l'art antérieur (courbe 2), pour des fréquences supérieures à 3000 Hz environ.

Cette amélioration s'expliquerait par le titre très faible (1,7 dtex) des fibres d'absorption acoustique.

En définitive, l'introduction de fibres d'absorption telles que définies ci-dessus permet une amélioration notable de la résistance au grenaillage et de l'absorption acoustique.

## Revendications

1. Ecran de protection acoustique destiné à être monté sous un moteur de véhicule automobile, ledit écran comprenant un corps fibreux et poreux thermo-comprimé, ledit écran étant **caractérisé en ce que** les fibres constitutives dudit corps se répartissent selon les pourcentages en poids suivants :
• entre 15% et 25% de fibres d'absorption acoustique à base de polyéthylène téréphtalate (PET) et de titre compris entre 1,5 et 2 dtex,
• entre 30% et 40% de fibres de verre pour apporter la tenue mécanique,
• entre 40% et 50% de fibres de liage en polypropylène assurant une liaison entre les fibres dudit corps suite à leur fusion.

2. Ecran selon la revendication 1, **caractérisé en ce que** les fibres d'absorption acoustique à base de polyéthylène téréphtalate (PET) ont un titre de 1,7 dtex.

3. Ecran selon l'une des revendications 1 ou 2, **caractérisé en ce que** les fibres se répartissent selon les pourcentages en poids suivants :
• entre 18% et 22% de fibres d'absorption acoustique,
• entre 33% et 37% de fibres de verre,
• entre 43% et 47% de fibres de liage.

4. Ecran selon l'une quelconque des revendications 1 à 3, **caractérisé en ce que** les fibres de verre présentent un diamètre compris entre 10 et 30 microns.

5. Ecran selon l'une quelconque des revendications 1 à 4, **caractérisé en ce que** les fibres de verre présentent une longueur comprise entre 60 et 100 mm.

6. Ecran selon l'une quelconque des revendications 1 à 5, **caractérisé en ce que** le propylène constitutif des fibres de liage a subi une modification chimique rehaussant son point de fusion.

7. Ecran selon l'une quelconque des revendications 1 à 6, **caractérisé en ce que** les fibres de liage ont une longueur comprise entre 55 et 65 mm.

## Patentansprüche

1. Akustische Abschirmung, die dazu bestimmt ist, unter einem Kraftfahrzeugmotor montiert zu werden, wobei die Abschirmung einen faserigen und porösen thermoverdichteten Körper umfasst, wobei die Abschirmung **dadurch gekennzeichnet ist, dass** die konstitutiven Fasern des Körpers entsprechend den folgenden Gewichtsprozentsätzen verteilt sind:
• zwischen 15 % und 25 % an akustischen Absorptionsfasern auf Basis von Polyethylenterephthalat (PET) und mit einem Titer zwischen 1,5 und 2 dtex,
• zwischen 30 % und 40 % an Glasfasern zum Beibringen der mechanischen Haltung,
• zwischen 40 % und 50 % an Bindefasern aus Polypropylen, für eine Verbindung zwischen den Fasern des Körpers nach deren Fusion.

2. Abschirmung nach Anspruch 1, **dadurch gekennzeichnet, dass** die akustischen Absorptionsfasern auf Basis von Polyethylenterephthalat (PET) einen Titer von 1,7 dtex aufweisen.

3. Abschirmung nach einem der Ansprüche 1 oder 2, **dadurch gekennzeichnet, dass** sich die Fasern entsprechend den folgenden Gewichtsprozentsätzen verteilen:
• zwischen 18 % und 22 % an akustischen Absorptionsfasern,
• zwischen 33 % und 37 % an Glasfasern,
• zwischen 43 % und 47 % an Bindefasern.

4. Abschirmung nach einem der Ansprüche 1 bis 3, **dadurch gekennzeichnet, dass** die Glasfasern einen Durchmesser aufweisen, der zwischen 10 und 30 Mikrometern liegt.

5. Abschirmung nach einem der Ansprüche 1 bis 4, **dadurch gekennzeichnet, dass** Glasfasern eine Länge aufweisen, die zwischen 60 und 100 mm liegt.

6. Abschirmung nach einem der Ansprüche 1 bis 5, **dadurch gekennzeichnet, dass** das konstitutive Propylen der Bindefasern einer chemischen Modifikation unterzogen wird, die dessen Schmelzpunkt erhöht.

7. Abschirmung nach einem der Ansprüche 1 bis 6, **dadurch gekennzeichnet, dass** die Bindefasern eine Länge aufweisen, die zwischen 55 und 65 mm liegt.

## Claims

1. An acoustic shield intended to be mounted under a motor vehicle engine, said shield comprising a thermo-compressed fibrous and porous body, said shield being **characterised in that** the constituent fibres of said body are distributed according to the following percentages by weight:
• between 15% and 25% of sound-absorbing fibres based on polyethylene terephthalate (PET) and with a titre comprised between 1.5 and 2 dtex,
• between 30% and 40% of glass fibres to provide mechanical strength,
• between 40% and 50% of polypropylene binder fibres ensuring bonding between the fibres of said body following melting thereof.

2. The shield according to claim 1, **characterised in that** the sound-absorbing fibres based on polyethylene terephthalate (PET) have a titre of 1.7 dtex.

3. The shield according to one of claims 1 or 2, **characterised in that** the fibres are distributed according to the following percentages by weight:
• between 18% and 22% of sound-absorbing fibres,
• between 33% and 37% of glass fibres,
• between 43% and 47% of binder fibres.

4. The shield according to any one of claims 1 to 3, **characterised in that** the glass fibres have a diameter comprised between 10 and 30 microns.

5. The shield according to any one of claims 1 to 4, **characterised in that** the glass fibres have a length comprised between 60 and 100 mm.

6. The shield according to any one of claims 1 to 5, **characterised in that** the constituent propylene of the binder fibres has undergone a chemical modification raising its melting point.

7. The shield according to any one of claims 1 to 6, **characterised in that** the binder fibres have a length comprised between 55 and 65 mm.
